# Europäisches Patentamt

## European Patent Office

## Office européen des brevets

(19)

(11) Publication number: **0 105 076**
**B1**

(12) **EUROPEAN PATENT SPECIFICATION**

(45) Date of publication of patent specification: **19.11.87**

(51) Int. Cl.⁴: **F 16 M 13/00, F 21 V 21/28**

(21) Application number: **83103525.8**

(22) Date of filing: **12.04.83**

(54) Ergonomic equipment arm.

(30) Priority: **04.10.82 US 432598**

(43) Date of publication of application:
**11.04.84 Bulletin 84/15**

(45) Publication of the grant of the patent:
**19.11.87 Bulletin 87/47**

(84) Designated Contracting States:
**DE FR GB**

(56) References cited:
**FR-A- 663 741**
**FR-A- 974 634**
**GB-A-2 024 926**
**US-A-2 220 214**
**US-A-2 233 300**
**US-A-3 358 957**

(73) Proprietor: **WANG LABORATORIES INC.**
**One Industrial Avenue**
**Lowell, MA 01851 (US)**

(72) Inventor: **Dayton, Douglas Cameron**
**59 Magnolia Avenue Apt. 1**
**Cambridge, MA (US)**
Inventor: **Ardito, John David**
**26 Hayden Lane**
**Bedford, MA (US)**

(74) Representative: **Behrens, Dieter, Dr.-Ing. et al**
**Patentanwälte WUESTHOFF-V. PECHMANN-**
**BEHRENS-GOETZ Schweigerstrasse 2**
**D-8000 München 90 (DE)**

Courier Press, Leamington Spa, England.

## Description

The present invention relates to a movable arm on which equipment is mounted and supported while being moved.

Movable arms on which equipment may be mounted are known (US—A—3,030,128). The movable arm shown in this patent utilizes three rotating and swivel joints in conjunction with friction couplings and a torsion spring to counterbalance the weight of a lamp at the end of the arm. The interaction of all these joints and elements permits the lamp at the end of the movable arm to be easily positioned in a large number of positions within the reach of the arm, and the lamp will stay in the position in which it is placed.

There are, however, problems with such prior art movable arms. Each movable joint only has two degrees of freedom and when it is desired to orient the lamp or other equipment in a specific position there is often the difficulty in that the three movable joints do not cooperatively move as easily as desired when the lamp or other equipment at the end of the arm is moved.

In addition, in some applications it is sometimes desired to change the type of equipment mounted on the end of the movable arm. In the prior art the weight of the new equipment must be the same as the weight of the original equipment being replaced. If heavier or lighter equipment is placed on the end of the arm the counterbalancing forces within the arm are not optimum for the new weight and the equipment sometimes will not stay in a position in which it is placed. For example, with a heavier piece of equipment the arm will sag when the equipment is manually positioned and then released. To compensate for this type of problem in the prior art the pressure on friction coupling elements in one or more of the movable joints is increased or decreased. However, when the pressure is increased it is correspondingly harder to position the heavier equipment on the end of the arm due to jerky arm movement with the result being difficulty in positioning the equipment in a precise position. This is caused by greater forces being required to overcome the increased friction and therefore increased tendency to overshoot. Thus, changing pressure on friction couplings accommodate for differing weight loads on the end of a movable arm is impractical. Accordingly, in the prior art most movable arms are only designed for a given weight load on the end of the arm. This has been acceptable in the prior art as there has not been much demand for movable arms that can accommodate differing weight loads.

Compensation of varying weight is known, though. FR—A—663 741 discloses a movable arm according to the preamble of claim 1 and teaches a movable light or lamp arm suspending a light weight lamp from a ceiling that uses a compressed helical spring in a movable portion of a hollow two-halves' housing to create pressure against a second half of the housing so that as one part is moved it is a friction movement so that the light arm may be moved to a position and stay where it is placed. This friction arrangement is constrained to one plane. The helical spring may be tensioned by winding it at one end while the other end is fixedly secured to the housing. Winding is effected by a wheel into which engages the one end of the spring. For winding or unwinding the spring the wheel is rotated through a hand-driven worm gear meshing with the circumferential surface of the wheel.

In recent times there has been developed a need for a movable arm that can accommodate differing weight loads without experiencing the detrimental operation described above. For example, in the computer field including the word processing and office equipment fields in which television type video displays are used, some systems place the video display on a movable arm permitting the equipment user to place the display in whatever position they desire for greater ease in viewing the monitor. Movable arms have been designed for these applications. However, in different system configurations the displays are of different weights due to differing amounts of electronic equipment being in the ensclosure on the movable arm, due to larger or smaller cathode ray tubes being used for the display, and due to cathode ray tubes being from different manufactures and thereby being of differing weight although they have the same size display areas. This has required that a number of different movable arms be utilized, or that the problems in the prior art be lived with. For accommodation of different loads on the free end of the arm the torsion spring is typically changed. Often there is a compromise between these two solutions which lessens the problem but does not minimize or eliminate it. When a number of movable arms must be utilized there are increased costs for manufacturing and keeping records.

It is a problem of the invention to provide a movable arm, especially for video display type monitors, that can be easily adjusted to compensate for differing weight loads at the end of the arm without any change in the force required to move the load, and without requiring different parts and that can be moved more easily and stably than in the prior art.

The above described problems with prior art movable arms are solved by the novel movable arm, which is together with its further developments defined in the appended claims.

The novel arm utilizes three movable joints two of which are pivoting joints each having two degrees of freedom and the third joint is a unique friction ball joint having more than two degrees of freedom which thereby allows the arm to be moved more easily. Means are provided for quick and easy adjustment of the tension of the torsion spring within the joint of the arm at the base end opposite to the ball joint receiving the equipment to properly counterbalance differing weights on the end of the arm. This permits different weights on the end of the movable arm to be moved with equal ease. A clamp is provided at the joint at the base end of the movable arm opposite the free end on which the equipment is fastened which permits the movable arm to be mounted on other than a dedicated support base table. This permits greater flexibility and portability. For example, with a small computer system or word processor terminal the video display can be mounted on the edge of an existing desk or table.

Ball joints are known per se. Simple ball joints have been used on equipment arms. A ball joint for heavy duty vehicle seats where the socket and ball are separated by a spacer and a spring is used to force the three elements together into a locking position, is known from GB—B—2 024 926. The spring for forcing the ball and socket together to lock them in position must be released before the ball can be moved to a new position. This is a requirement of car seats. In a rough duty vehicle a readily movable ball joint seat arrangement would be disastrous. The invention provides a friction ball joint that can be moved without having to release the pressure creating the pressure in the joint. It is easily movable in the socket while it stays in its rest position with a load thereon.

The invention will be better understood on reading the following detailed description in conjunction with the drawing in which:

Fig. 1 shows the assembled arm attached to the top of a table and flexibly supporting a television type monitor;

Fig. 2 is an exploded assembly drawing showing the individual elements making up the novel arm;

Fig. 3 is a bottom view of the base of the arm to show the manner in which it controls the maximum arm swing;

Fig. 4 is a side view of the base of the arm showing the torsion spring adjustment; and

Fig. 5 is a cross section view of the assembled friction ball joint at the end of the arm supporting a piece of equipment such as a video display.

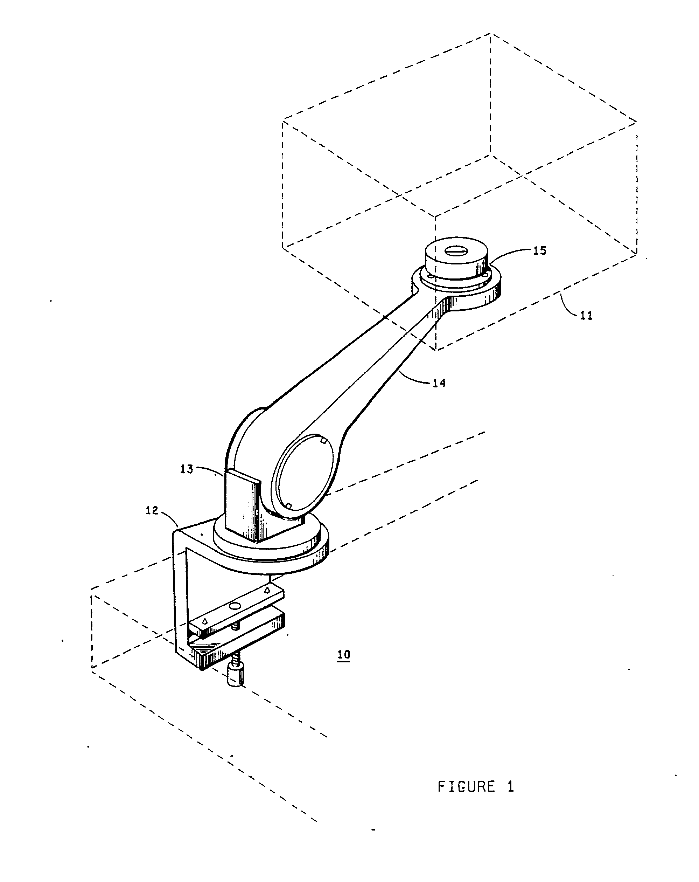

In Figure 1 is shown an assembled movable arm in accordance with the teaching of the invention. The novel arm is quickly and easily mounted to table (support structure) 10 which is shown in phantom view by means of a clamp (mounting means) 12. The other end of arm is fastened to a piece of equipment 11 also shown in phantom view and, which for the present application is a video display. The arm is made up of clamp 12 which is used to fasten it to the edge of a desk or table 10 or to any other mounting structure having an edge to which the clamp can be fastened. A base 13 is connected to clamp 12 such that base 13 can rotate in a plane parallel to the surface of table 10. Base 13 is connected to an arm member 14 via an adjustable torsion spring [not shown] and a friction coupling [not shown]), and arm member 14 can rotate in a plane perpendicular to the plane of the top of table 10. At the outer end of arm member 14 is connected a friction ball joint assembly 15 which is in turn fastened to the base of video display 11. Friction ball joint assembly 15 enables video display 11 to be tilted forward and backward and from side to side. With friction ball joint assembly 15 video display 11 may be moved to any position and it will remain in that position without tilting further due to its own weight. Thus, the combination of the different joints in the movable arm coupled with an adjustable torsion spring and friction coupling provide for multiple degrees of freedom of movement of the movable arm and video display 11.

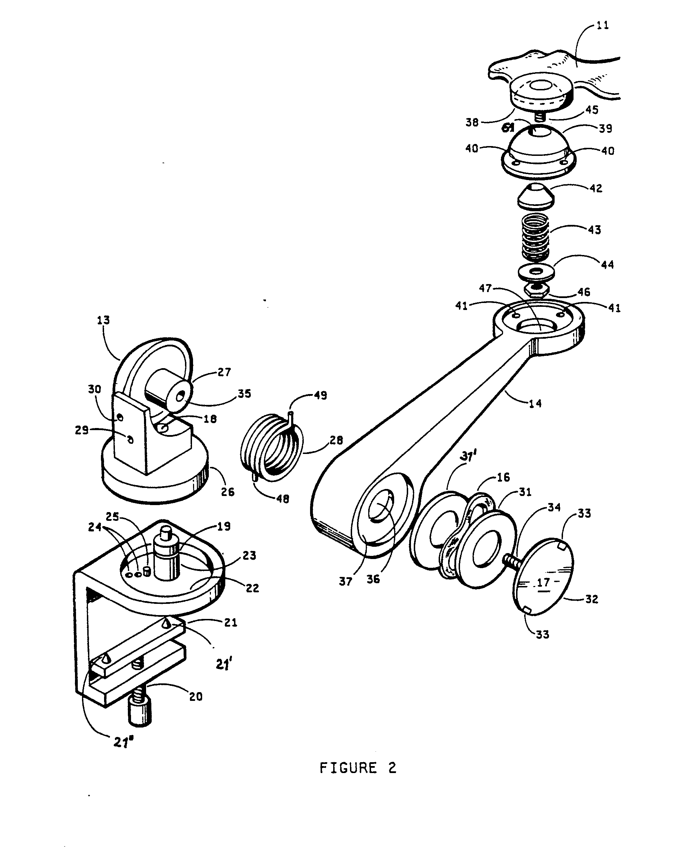

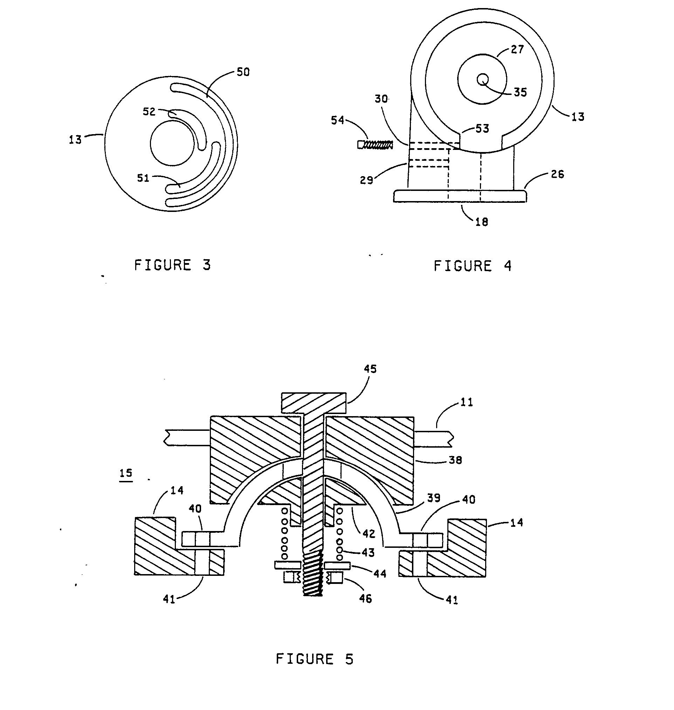

In Figure 2 is shown an exploded view of the movable arm showing the individual components making up the arm. Clamp 12 is partially C shaped as shown to go around the edge of the desk, table or any other mounting surface, whether that mounting surface be horizontal or other than horizontal. Screw means 20 is used to move plate (jaw) 21 in a vertical direction to securely fasten clamp 12 onto the edge of table in a manner well known in the art. The top of plate 21 and its opposing surface on clamp 12 may have a piece of plastic or other material fastened thereto to provide friction in contact with the mounting surface and to prevent marring the mounting surface. Plate 21 has two conical protuberation 21' and 21'' which may be created with conical set screws in threaded holes. These protuberations 21' and 21'' imbed in the underside of table 10 so the clamp will not slip. The top surface of clamp 12 has a circular recess 22 having a diameter only slightly larger than the circular bottom 26 of the base 13. Within recess 22 are located three holes 24 in only one of which is placed a peg 25. The particular one of holes 24 in which the peg 25 is placed determines the rotational travel of base 13 on the top of clamp 12 as will be better understood in the description for Figure 3 further in this specification. Holes 24 may also be threaded and a set screw turned partially therein to accomplish the same result as peg 25.

Recess 22 in clamp 12 also has a pivot member 23 mounted thereon which has a groove 19 around its periphery as shown. Groove 19 is used to fasten base 13 to clamp 12 as is described hereinafter. Base 13 has a hole 18 vertically therethrough having substantially the same diameter as pivot member 23. Hole 18 may also be oversized with a brass bushing press fit therein with the inside diameter of the bushing being substantially the same diameter as pivot member 23. Base 13 is mounted down on clamp 12 with its bottom portion 26 sitting within recess 22 of clamp 12 and with pivot member 23 coming up through hole 18 of base 13. When in this position a recessed screw [not shown] is turned inward in a threaded hole 29 through base 13 until the tip of the screw extends into groove 19 around pivot member 23. There is not an interference fit between the screw and pivot member 23. A drop of thread lock sealant may be added to the thread of a screw to retain it in hole 29 without loosening. With the screw mounted in hole 29 as just described, base 13 cannot be removed from the clamp 12 but can rotate about the pivot member 23. A nyler piece [not shown] may be placed in recess 22 before base 13 is assembled to clamp 12 to aid in movement of base 13.

Base 13 also has a pivot member 27 which is coaxial with and mounts within hole 36 through arm member 14 when the arm member 14 is assembled to base 13. The diameter of hole 36 and pivot member 27 are substantially the same. Again, a brass bushing may be used in hole 36. In assembly a torsion spring 28 is partially wound to provide tension, is mounted over the outside of pivot member 27 and arm member 14 is then mounted up against base 13 on pivot member 27. When arm member 17 is mounted up against base 13, wound torsion spring 28 is captivated between these two members. Second hook end 49 of torsion spring 28 is captivated by a boss [not shown] within the back side of arm member 14. First hook end 48 of torsion spring 28 crosses the axis of a threaded hole 30 through base 13 and is captivated by a boss 53 [not shown in Fig. 2, but shown in Fig. 4] on base 13 to prevent torsion spring 28 for unwinding. A recessed screw 54 [not shown in Fig. 2, but shown in Fig. 4] within threaded hole 30 has the tip of the screw hitting hook end 48 of torsion spring 28. As the screw [not shown] is screwed further within hole 30 it pushes against hook end 48 of spring 28 to increase the torsion loading of torsion spring 28 and thereby provides an effectual means to adjust the torsion loading of torsion spring 28 to compensate for different weight loads attached to the outer end of arm member 14 via friction ball joint assembly 15. Initially, screw 54 in hole 30 is set to push hook end 48 away from lip 53 [shown in Fig. 4] and thereafter the torsion of spring 28 may be increased or decreased by turning screw 54.

Arm member 14 is held assembled to base 13 in the following manner. A friction screw 17 has a broad (wide) head 32 and a threaded screw shaft 34 which passes through friction washer 31, wave washer 16, cork washer 31' and then through hole 36 at the bottom end of arm member 14. Threaded shaft 34 then passes through torsion spring 28 and into a threaded hole 35 in the end of pivot member 27 on base 13. Head 32 of friction screw 17 has a diameter only slightly smaller than the diameter of a recess 37 in the bottom end of arm member 14. On assembly the screw captivates washers 16, 31 and 31' within recess 37 and fastens arm member 14 onto base 13. Head 32 of friction screw 17 has two edge recesses 33 and a spanner wrench is utilized to tighten screw 17. As friction screw 17 is tightened against washers 16, 31 and 31' friction is created against the movement of arm member 14 about pivot member 27 due to the function of the washers. The outer end of arm member 14 has a hole 47 therethrough and a plurality of mounting holes 41 as shown. On assembly, screws coming up through threaded holes 41 from the bottom of arm member 14 will be turned into respective ones of threaded holes 40 through the flange of middle (second) friction member 39 of the friction ball joint 15. This is shown in greater detail in Figure 5. In this manner middle friction member 39 is attached to the outer end of arm member 14. The rest of the friction ball joint 15 comprises an upper (first) friction member 38, a fastening screw (bolt) 45, a lower (third) friction member 42, a spring 43, a flat washer 44, and a nut 46. The diameter of hole 47 through the outer end of arm member 14 is greater than the diameter of lower friction member 42, spring 43, flat washer 44, and nut 46. The holes through upper friction member 38 and lower friction member 42 each have a diameter only slightly larger than the diameter of the shaft of screw 45. However, the hole 61 through middle friction member 39 is significantly larger than the diameter of the threaded shaft of fastening screw 45. The concave bottom of upper friction member 38 is spherical and has the same radius and center point of curvature as the convex spherical top of middle friction member 39. The concave bottom side of middle friction member 39 is also spherical, has a radius of curvature equal to that of the convex spherical top of lower friction member 42 and has a common center point of radius as all the spherical surfaces. On final assembly the spherical top of lower friction member 42 is mounted up inside the spherical surface in the bottom of middle friction member 39 and the spherical top surface of member 39 is mounted up inside the spherical surface in the bottom of upper frction member 39 such that all spherical surfaces are free to move about the common center point. On assembly nut 46 is screwed onto the threaded end of fastening screw 45 and is screwed down to apply pressure via washer 44 and spring 43 to hold friction members 38, 39 and 42 against each other as is shown in greater detail in Fig. 5. Depending upon how tight nut 46 is screwed on to the shaft of fastening screw 45 the degree of friction created between the spherical mating surfaces of friction elements 38, 39 and 42 may be varied to create the double surface friction ball joint 15. Upper friction member 38 is attached to video display 11 or may be an integral part of the base of it. As video display 11 is tilted forward, backward or to either side elements 38, 45, 42, 43, 44 and 46 pivot about while middle friction member 39 remains in a fixed position attached to the outer end of arm member 14. The friction between the assembled friction elements 38, 39 and 42 permit the video display 11 to be moved into any position and remain in that position.

Turning now to Fig. 3 therein is shown a bottom view of base 13. In the bottom of base 13 are located three grooves 50, 51, 52 which lie along the periphery of circles having different radii but a common center point. When base 13 is assembled to clamp 12 each of grooves 50, 51 and 52 sits directly over one of the three holes 24 in recess 22. As previously mentioned, peg 25 is inserted into one of holes 24 and extends upward out of the hole as shown in Figure 2. The portion of peg 25 protruding up from a hole 24 extends into one of grooves 50, 51 and 52. In particular, when peg 25 is located in the one of holes 24 closest to pivot member 23 of clamp 12, the top of peg 25 protrudes into groove 52. Rotation of base 13 is thereby limited to ninety degrees in one quadrant. When peg 25 is mounted in the middle one of holes 24 of base 13 its protruding end extends into groove 51 to restrict rotation to 90 degrees in a different quadrant. With peg 25 being located in the outer one of the three holes 24 it extends into groove 50 which allows for 180 degrees rotation of base 13 about pivot member 23 of clamp 12. It would be obvious to one skilled in the art that the position and length of these grooves may be varied to suit particular applications or may be eliminated allowing a full 360 degrees rotation.

Figure 4 is a side view of base 13 showing the aforementioned lip or boss 53 against which hook end 48 of partially wound torsion spring 28 sits when it is assembled between base 13 and arm member 14 on assembly of the arm. Hook end 48 extends downward and is in line with the axis of hole 30 through base 13 and recessed screw 54 therein the tip of which contacts hook end 48. The tension of torsion spring 28 is increased by turning screw 54 into threaded hole 30 through base 13. Screw 54 is screwed in to push hook end 48 of spring 28 away from lip 53 to set an initial tension in torsion spring 28. As different weight loads are attached to the outer end of the novel arm, screw 54 is screwed in or out to change the tension of torsion spring 28 to compensate for the different weight load. For lighter weight loads on the end of the novel arm screw 54 is unscrewed to decrease the tension of torsion spring 28. For heavier weights on the ends of the arm, screw 54 is screwed into hole 30 to further wind tension spring 28 and thereby increase the torsion to compensate for the increased weight load.

Figure 5 shows the above described details of the friction ball joint 15 with the ball joint being in an assembled state. The outer end of arm member 14 having hole 47 therethrough is only partially shown with its mounting holes 41 being aligned with the holes 40 through the flange of middle friction member 39 and which is fastened to arm member 14 via screws through each pair of holes 40 and 41. Thus, middle friction member 39 is affixed to arm member 14. Upper friction member 38 is an integral part of or is attached to video display 11 (not shown). It can be seen how the spherical inner surface of upper friction member 39 matches the convex spherical surface of middle friction member 39. It can also be seen how the concave spherical surface of member 39 mates with the convex spherical surface of lower friction member 42 and all spherical surfaces have a common center point of radii. In assembly nut 46 is fastened to fastening screw 45 as shown and applies pressure via washer 44 and spring 43 against lower friction member 42. This spring action forces friction members 38, 39 and 42 together so that there is a friction coupling as well as a ball joint function being accomplished between friction members 38, 39 and 42 as shown in Fig. 5. As video display 11 (not shown in Fig. 5) is tilted forward, backward or from side to side the ball joint friction members 38, 39 and 42 rotate against each other with a friction coupling. This friction coupling permits the video display 11 to be tilted to a certain position and then to stay in that position. The degree of friction coupling in this friction ball joint depends upon the nature of the materials and the amount of force transmitted through spring 43 to friction elements 38, 39 and 42 when turning nut 46 onto fastening screw 45.

While what has been described above is the preferred embodiment of the invention, it would be obvious to those skilled in the art that numerous variations may be made therein without departing from scope of the invention. For instance hole 61 through middle friction member 39 may be oval or any other shape and limit the degree to which video display 11 (not shown in Fig. 5) may be tilted. In addition, spring 43 in the friction ball joint 15 may be eliminated and pressure applied directly by nut 46.

### Claims

1. An ergonomic movable equipment arm having multiple degrees of freedom, on one end, the free end, of which is mounted an equipment (11), especially such as a video display or monitor in a computer or word processing system, and the other end of which is attachable to a support structure (10), especially to a desk or table, said arm comprising:
    mounting means (12) for detachably mounting the movable arm to the support structure (10),
    a base (13) pivotally fastened to the mounting means (12) and including a swivel member,
    an arm member (14)
    the one end being pivotally fastened to the base (13) through a swivel joint
    comprising a friction coupling and an adjustable helical spring (28) having a first and a second hook end (48, 49) mounted between the base (13) and the arm member (14) and functioning to counterbalance the weight of the equipment (11) on the free end of the arm member,
    adjustment means (54) associated with the base (13) and engaging the first hook end (48) while the second hook end (49) is held in a fixed position against the arm member (14), the adjustment means being operable to either wind the helical spring (28) to increase tension or to unwind the helical spring to decrease tension to thereby compensate for said equipment being of different weights, and
    the free end of the arm member (14) being pivotally fastened to the equipment (11) through a friction joint (15),
    characterized in that
    said friction joint is a friction ball joint (15),
    the first friction coupling comprises
    a friction screw (17) having a wide head (32) and a screw shaft (34) which passes through the one end of the arm member (14) and the helical spring (28) and screws into the base (13) to hold the arm member to the base and

at least one friction washer (16, 31, 31') between the head (32) of the friction screw (17) and the arm member (14), the friction washer cooperating with the helical spring (28) to allow said equipment (11) on the free end of the arm member (14) to be moved to some position and remain in that position, the amount of friction being dependent upon the position of the friction screw (17), and

the adjustment means for the torsion spring (28) associated with the base (13) comprises a screw (54) mounted in a threaded hole (30) through the first swivel member with one end of the screw (54) touching the first hook end (48) and as the screw is turned in one direction it applies force against the first hook end and winds said helical spring (28) to increase tension and as said screw (54) is turned in the opposite direction it removes force from the first hook end (48) to unwind the helical spring and decrease tension.

2. The arm in accordance with claim 1 characterized in that

the friction ball joint (15) comprises

a first friction ball joint member (38) having a first concave spherical surface,

a second friction ball joint member (39) having a first convex spherical surface with a radius of curvature equal to that of the first concave spherical surface with which it mates when the friction ball joint is assembled, and

means for fastening (43, 44, 45, 46) the first and the second friction ball joint members (38, 39) together with their spherical surfaces mating, the fastening means forcing the two members together to create a friction coupling therebetween.

3. The arm in accordance with claim 2 characterized in that

the second friction ball joint (39) is fastened to the free end of the arm member (14) and has a second concave spherical surface, the first friction ball joint member (38) is attached to said equipment (11), and

the friction ball joint (15) further comprises

a third friction ball joint member (42) having a second convex spherical surface with a radius of curvature equal to that of the second concave spherical surface with which it mates when the friction ball joint is assembled, the fastening means (43, 44, 45, 46) fastening the first, second and third friction ball joint members (38, 39, 42) together with their spherical surfaces mating to create said friction coupling therebetween so that as the equipment (11) is tilted in any direction the first and third friction ball joint members (38, 42) move in unison against the second member (39).

4. The arm in accordance with claim 3 characterized in that

each of the first, second and third friction ball joint members (38, 39, 42) have an aperture through their spherical surfaces with the apertures through the first and third members (38, 42) being of a first diameter and the aperture (61) through the second member (39) being larger than the first diameter, and

the fastening means comprises

a bolt (45) passing through the apertures of the first, second and third members (38, 39, 42), and

a nut (46) on the end of the bolt (45), the nut being turned onto the bolt to apply a force to the first, second and third member (38, 39, 42) to create said friction coupling therebetween.

5. The arm in accordance with any of claims 1 to 4

characterized in that

the mounting means (12) has a plurality of holes (24) located on the surface thereof against which the base (13) is mounted, the base (13) has a plurality of circular grooves (50, 51, 52) of defined arcuate length on the side thereof that is in contact with the mounting means (12), with the radius of the circles on the circumference of which the grooves are located being of different radii, and at least one of the grooves being located over each one of the holes in the mounting means when the base (13) is rotatably fastened to said mounting means (12), and a peg (25) is placed in one of the holes (24) prior to assembling the base (13) to the mounting means (12) and the peg (25) rides in the groove associated with the hole without interference when the base (13) is fastened to the mounting means, the peg (25) functioning to limit the travel of the base (13) as it rotates on the mounting means (12).

6. The arm in accordance with any of claims 1 to 5

characterized in that

the mounting means (12) comprises an adjustable clamp having two jaws, one jaw gripping either side of the support structure (10) to attach the movable equipment arm to the support structure, one of the jaws (21) having at least one protuberation (21', 21'') therefrom to engage the support structure to prevent the arm from being loosened from the support structure.

## Patentansprüche

1. Ergonomischer beweglicher Gerätetragarm mit mehreren Freiheitsgraden, der an einem — der freien — Ende ein Gerät (11) trägt, insbesondere einen Bildschirm oder Monitor eines Rechners oder einer Textverarbeitungsanlage, und mit seinem anderen Ende an einer Unterlage (10), insbesondere an einem Schreibtisch oder Tisch befestigt ist, mit

— eine Befestigungsvorrichtung (12) zum lösbaren Anbringen des beweglichen Tragarms an der Unterlage (10),

— einer Basis (13), die mit der Befestigungsvorrichtung (12) drehbar verbunden ist und ein Drehgelenkteil umfaßt,

— einem Tragarm (14),

— der an einem Ende mit der Basis (13) über ein Drehgelenk drehbar verbunden ist, das

— eine Reibkupplung und eine einstellbare Schraubenfeder (28) aufweist, welche ein erstes und ein zweites, hakenförmiges Endstück (48, 49) hat, zwischen die Basis (13) und den Tragarm (14) eingespannt ist und das Gewicht des Gerätes (11) am freien Ende des Tragarms ausgleicht,

eine Einstellvorrichtung (54) mit der Basis (13) verbunden ist und am ersten hakenförmigen Endstück (48) angreift, wogegen das zweite hakenförmige Endstück (49) in einer festen Stellung am Tragarm (14) gehalten ist, wobei die Einstellvorrichtung die Schraubenfeder (28) entweder zu spannen vermag, um die Zugspannung zur vergrößern, oder zu entspannen, vermag, um die Zugspannung zu verkleinern, derart daß Gewichtsunterschiede

beim Gerät ausgeglichen werden können, und
— der an seinem freien Ende mit dem Gerät (11) durch ein Reibgelenk drehbar verbunden ist,
dadurch gekennzeichnet, daß
— das Reibgelenk ein Reibkugelgelenk (15) ist,
— die Reibkupplung umfaßt:
— eine Reibschraube (17) mit einem großen Kopf (32) und einem Gewindeschaft (34), der das eine Ende des Tragarms (14) und die Schraubenfeder (28) durchdringt und in die Basis (13) eingeschraubt ist, um den Tragarm an der Basis festzuhalten, und
— wenigstens eine Reibscheibe (16, 31, 31') zwischen dem Kopf (32) der Reibschraube (17) und dem Tragarm (14), die mit der Schraubenfeder (28) zusammenwirkt und eine Verstellung des Gerätes (11) auf dem freien Ende des Tragarms (14) in eine beliebige Stellung und sein Verharren in dieser Stellung ermöglicht, wobei Betrag der Reibung von der Stellung der Reibschraube (17) abhängig ist, und
— die mit der Basis (13) verbundene Einstellvorrichtung für die Schenkelfeder (28) eine Schraube (54) umfaßt, die in ein das Drehgelenkteil durchsetzendes Gewindeloch (30) eingeschraubt ist, mit einem Ende am ersten hakenförmigen Endstück (48) anliegt und auf dieses bei Drehung in einer Richtung eine Kraft ausübt und die Schraubenfeder (28) zur Vergrößerung der Zugspannung spannt und bei Drehung in der Gegenrichtung das erste hakenförmige Endstück (48) entlastet, um die Schraubenfeder zu entspannen und die Zugspannung zu verkleinern.

2. Tragarm nach Anspruch 1,
dadurch gekennzeichnet, daß
das Reibkugelgelenk (15) umfaßt:
— eine erste Reibkugelgelenkteil (38) mit einer ersten konkav-kugeligen Fläche,
— ein zweites Reibkugelgelenkteil (39) mit einer ersten konvex-kugeligen Fläche von gleichem Krümmungsradius wie die erste konkav-kugelige Fläche, mit der die bei zusammengebautem Reibkugelgelenk- zusammenpaßt, und
— Befestigungsmittel (43, 44, 45, 46) zum Zusammenhalten des ersten und des zweiten Reibkugelgelenkteils (38, 39) in der Weise, daß ihre kugeligen Flächen zusammenpassen, wobei die Befestigungsmittel die beiden Teile zusammenpressen und zwischen ihnen eine Kraftschlüssige Verbindung herstellen.

3. Tragarm nach Anspruch 2,
dadurch gekennzeichnet, daß
— das zweite Reibkugelgelenkteil (39) am freien Ende des Tragarms (14) befestigt ist und eine zweite konkav-kugelige Fläche aufweist,
— des erste Reibkugelgelenkteil (38) am Gerät (11) befestigt ist, und
— das Reibkugelgelenk (15) ferner ein drittes Reibkugelgelenkteil (42) mit einer zweiten konvex-kugeligen Fläche von gleichem Krümmungsradius wie die zweite konkav-kugelige Fläche, mit der sie bei zusammengebautem Reibkugelgelenk zusammenpaßt, umfaßt,

wobei die Befestigungsmittel (43, 44, 45, 46) die drei Reibkugelgelenkteile (38, 39, 42) in der Weise zusammenhalten, daß ihre kugeligen Flächen zusammengepaßt, und zwischen ihnen diese kraftschlüssige Verbindung herstellen, derart daß beim Kippen des gerätes (11) in eine beliebige Richtung das erste und das dritte Reibkugelgelenkteil (38, 42) sich gemeinsam gegenüber dem zweiten Teil (39) bewegen.

4. Tragarm nach Anspruch 3,
dadurch gekennzeichnet, daß
— jedes der drei Reibkugelgelenkteile (38, 39, 42) in seiner kugeligen Fläche von einer Öffnung durchsetzt ist, wobei die Öffnungen im ersten und dritten Teil (38, 42) von einem ersten Durchmesser sind und die Öffnung (61) im zweiten Teil (39) größer ist als der erste Durchmesser, und
— die Befestigungsmittel
— einen durch die Öffnungen in den drei Teilen (38, 39, 42) hindurchgesteckten Bolzen (45) und
— eine Mutter (46) am Ende des Bolzens (45) umfassen, wobei die Mutter auf den Bolzen aufgeschraubt wird, um zum Herstellen der kraftschlüssigen Verbindung zwischen den drei Teilen (38, 39, 42) eine Kraft auf sie auszuüben.

5. Tragarm nach einem der Ansprüche 1 bis 4,
dadurch gekennzeichnet, daß
— die Befestigungsvorrichtung (12) mehrere Löcher (24) aufweist, die in derjenigen ihrer Flächen angeordnet sind, an welche die Basis (13) anmontiert wird,
— die Basis (13) mehrere kreisförmige Nuten (50, 51, 52) von begrenzter Bogenlänge auf der an der Befestigungsvorrichtung (12) anliegenden Seite hat, wobei die Kreise, auf deren Umfang die Nuten angeordnet sind, von verschiedenen Radien sind und, wenn die Basis (13) mit der Befestigungsvorrichtung (12) drehbar verbunden ist, über jedem der Löcher in der Befestigungsvorrichtung wenigstens eine der Nuten angeordnet ist, und
— ein Zapfen (25) vor dem Zusammenbauen der Basis (13) und der Befestigungsvorrichtung (12) in eines der Löcher (24) eingesetzt wird, in der dem Loch zugeordneten Nut frei beweglich geführt ist, wenn die Basis (13) an der Befestigungsvorrichtung befestigt ist, und den Weg der Basis (13) bei Drehung auf der Befestigungsvorrichtung (12) begrenzt.

6. Tragarm nach einem der Ansprüche 1 bis 5,
dadurch gekennzeichnet, daß
die Befestigungsvorrichtung (12) eine einstellbare Zwinge mit zwei Klemmbacken umfaßt, die je auf einer Seite der Unterlage (10) fassen, um den beweglichen Gerätetragarm an der Unterlage zu befestigen, wobei eine der Klemmbacken (21) wenigstens einen Vorsprung (21', 21''), hat, der an der Unterlage angreift und verhindert, daß sich der Tragarm von der Unterlage löst.

**Revendications**

1. Bras ergonomique mobile de soutien d'appareils, à plusieurs degrés de liberté, dont l'une des extrémités, qui est son extrémité libre, porte un appareil (11), plus particulièrement un écran vidéo ou moniteur d'un ordinateur ou d'un système d'édition de textes, et dont l'autre extrémité est susceptible d'être fixée à un support, plus particulièrement à un bureau ou une table, ledit bras comportant

— un dispositif de fixation (12), destiné à monter le bras mobile sur le support (10), de façon amovible,

— une base (13), montée, à rotation, sur le dispositif de fixation (12) et comprenant un élément d'articulation,

— un bras (14),

— qui, à cette première de ses extrémités, est monté, à rotation, sur la base (13) au moyen d'une articulation tournante, laquelle comprend

— un accouplement à friction et un ressort à boudin (28) réglable, ce dernier présentant une première extrémité (48) et une deuxième extrémité (49), les deux sous forme de crochet, et étant disposé entre la base (13) et le bras (14) pour contrebalancer le poids de l'appareil (11) sur l'extrémité libre du bras,

un moyen de réglage (54), associé à la base (13) et attaquant la première extrémité (48), sous forme de crochet, alors que la deuxième extrémité (49), sous forme de crochet, est tenue dans une position fixe, au contact avec le bras (14), ledit moyen de réglage fonctionnant ou bien à enrouler le ressort à boudin (28) afin d'augmenter la tension, ou bien à le dérouler pour réduire la tension, de manière à réaliser ainsi une compensation en cas d'appareils de poids différents, et

— qui, par son extrémité libre, est rattaché, à rotation, à l'appareil (11) au moyen d'un joint à friction (15), caractérisé en ce que

— ledit joint à friction est un joint à rotule à friction (15),

— l'accouplement à friction comporte

— une vis de friction (17), formée avec une large tête (32) et une tige filetée (34) qui traverse ladite une extrémité du bras (14) et le ressort à boudin (28) et est vissée dans la base (13) afin de tenir le bras attaché à la base, et

— une rondelle de friction (16, 31, 31'), au moins, entre la tête (32) de la vis de friction (17) et le bras (14), ladite rondelle de friction, en coopération avec le ressort à boudin (28), permet à l'appareil (11) qui se trouve monté sur l'extrémité libre du bras (14), d'être porté dans une position quelconque et d'y être maintenu, le montant de la friction étant déterminé par la position de la vis de friction (17),

et en ce que

— le moyen de réglage du ressort à boudin (28) qui est associé à la base (13), comporte une vis (54), disposée dans un trou taraudé (30), pratiqué dans l'élément d'articulation, ladite vis (54) touchant, avec l'une de ses extrémités, à la première extrémité (48), sous forme de crochet, et, lorsqu'elle est tournée dans une direction, exerçant une force sur la première extrémité, sous forme de crochet, et fait s'enrouler le ressort à boudin (28) afin d'augmenter la tension, et, lorsqu'elle est tournée dans la direction inverse, elle réduit la force sur la première extrémité (48), sous forme de crochet, pour dérouler le ressort à boudin et réduire la tension.

2. Bras selon la revendication 1, caractérisé en ce que le joint à rotule à friction (15) comporte

— un premier élément (38) de joint à rotule à friction, ledit élément présentant une première surface sphérique concave,

— un deuxième élément (39) de joint à rotule à friction, ledit élément présentant une première surface sphérique convexe, d'un rayon de courbure égal à celui de la première surface sphérique concave avec laquelle elle se trouve conjuguée après assemblage du joint à rotule à friction, et

— des moyens de fixation (43, 44, 45, 46), destinés à tenir ensemble le premier et le deuxième élément (38, 39) du joint à rotule à friction, de telle manière que leurs surfaces sphériques soient conjuguées, lesdits moyens de fixation pressant les deux éléments l'un contre l'autre afin de produire entre eux une liaison par adhérence.

3. Bras selon la revendication 2, caractérisé en ce que

— le deuxième élément (39) du joint à rotule à friction est attaché à l'extrémité libre du bras (14) et présente une deuxième surface sphérique concave,

— le première élément (38) du joint à rotule à friction est attaché à l'appareil (11), et

— en ce que le joint à rotule à friction (15) comprend un troisième élément (42) de joint à rotule à friction, ledit élément présentant une deuxième surface sphérique convexe d'un rayon de courbure égal à celui de la deuxième surface sphérique concave, avec laquelle elle se trouve conjuguée après assemblage du joint à rotule à friction,

lesdits moyens de fixation (43, 44, 45, 46) tenant ensemble les trois éléments (38, 39, 42) du joint à rotule à friction de telle manière que leurs surfaces sphériques soient conjuguées, et produisant entre elles la sus-dite liaison par adhérence, de sorte que, lors d'un basculement de l'appareil (11) dans une direction quelconque, le premier et le troisième élément (38, 42) du joint à rotule à friction effectuent un mouvement en commun par rapport au deuxième élément (39).

4. Bras selon la revendication 3, caractérisé en ce que

— chacun des trois éléments (38, 39, 42) du joint à rotule à friction présente un trou à travers sa surface sphérique, les trous traversant le premier et le troisième élément (38, 42) ayant un premier diamètre, et le trou (61) qui traverse le deuxième élément (39) étant plus large que ledit premier diamètre, et

— en ce que les moyens de fixation comprennent

— un boulon (45), engagé dans les trous des trois éléments (38, 39, 42), et

— un écrou (46), disposé sur l'extrémité du boulon (45) et se vissant sur le boulon afin d'exercer une force sur les trois éléments (38, 39, 42) pour établir entre eux ladite liaison par adhérence.

5. Bras selon l'une quelconque des revendications 1 à 4, caractérisé en ce que

— le dispositif de fixation (12) présente plusieurs trous (24), disposés dans celle de ses surfaces sur laquelle est montée la base (13),

— plusieurs rainures circulaires (50, 51, 52) d'une longueur d'arc définie sont pratiqués dans la base (13) sur le côté au contact avec le dispositif de fixation (12), les cercles, sur les circonférences desquels sont disposées lesdites rainures, ayant des rayons différents, et quand la base (13) est montée à rotation sur le dispositif de fixation (12), une, au moins, desdites rainures se trouve alignée, en juxtaposition, avec chacun des trous pratiqués dans le dispositif de fixation, et

— en ce que, avant assemblage de la base (13) et du dispositif de fixation (12), un téton (25) est installé dans l'un des trous (24), ledit téton glissant librement dans la rainure correspondant au trou en question, quand la base (13) est attachée au dispositif de fixation, et fonctionnant à limiter la course de rotation de la base (13) sur le dispositif de fixation (12).

6. Bras selon l'une quelconque des revendications 1 à 5,
caractérisé en ce que
le dispositif de fixation (12) comporte une bride réglable à deux mâchoires, chacune de ces dernières serrant contre un côté du support (10) pour fixer le bras mobile de soutien d'appareil au support, et l'une des mâchoires (21) étant munie d'au moins une protubérance (21', 21'') qui vient en prise avec le support et empêche le bras de se détacher de celui-ci.

FIGURE 1

FIGURE 2

FIGURE 3

FIGURE 4

FIGURE 5